# EUROPEAN PATENT SPECIFICATION

(11) **EP 2 529 543 B1**
(45) Date of publication and mention of the grant of the patent: **11.07.2018**
(21) Application number: 11706379.2
(22) Date of filing: 28.01.2011
(51) Int. Cl.: H04M 3/56, H04L 12/18

(54) **METHOD AND APPARATUS FOR PROVIDING CALL CONFERENCING SERVICES**
VERFAHREN UND VORRICHTUNG ZUR BEREITSTELLUNG VON ANRUFKONFERENZDIENSTEN
PROCÉDÉS ET APPAREIL POUR ENVOYER DES MESSAGES À L'AIDE D'UNE MESSAGERIE VOCALE

(30) Priority: 11.01.2011 US 201113004869; 26.01.2011 US 201113014559; 28.01.2010 US 336930 P
(43) Date of publication of application: 05.12.2012
(73) Proprietor: QUALCOMM Incorporated, San Diego, CA 92121 (US)
(72) Inventor: JACOBSTEIN, Mark, Williams, San Diego CA 92121 (US); GUEDALIA, Jacob, San Diego CA 92121 (US); HARRIS, Sarah, San Diego CA 92121 (US); GUEDALIA, Isaac, David, San Diego CA 92121 (US)
(74) Representative: Tomkins & Co
(86) International application number: PCT/US2011/022989
(87) International publication number: WO 2011/097136

(56) References cited:
- US-A1- 2006 239 212
- US-A1- 2008 132 215
- US-A1- 2010 189 238

## Description

### BACKGROUND

In general, telephone conferencing is a tool for connecting a plurality of parties to each other by way of their respective telephone connections so that the parties may all participate in a telephone conference. The telephone conference may allow the parties to speak and listen to the other parties as if they were physically together. Typically, a notification is forwarded to telephone conference participants with a dial-in telephone number and a pass code for joining a telephone conference. Telephone conferences typically have an organizer or host whose account is used to distribute the invitations to the invitees of the telephone conference, and whose account is charged for the cost of such a telephone conference.

In addition, conferencing systems are typically provided by services which rely on electronic mail and browser-based invitation and hosting techniques for establishing the telephone conferences. Furthermore, conferencing systems generally rely on the entry of a pass code, usually a provided numerical code that is punched into a telephone's keypad to generate a detectable dual-tone multi-frequency signaling (DTMF) sequence to allow access of a participant to the telephone conference.

Such conferencing systems are difficult to use by users of a wireless device. Thus, there is a need in the art to provide methods and systems for facilitating the organization, hosting, establishment, and conducting of telephone conference sessions involving wireless device users and hosted by wireless device users.
US Patent Application Publication No. US 2008/0132215 discloses a user initiated invite for automatic conference participation by invitee.
US Patent Application Publication No. US 2006/239212 discloses a system for managing an ongoing conference provides a conference management system that enables contact with missing conference invitees during a conference. The system can identify one or more missing conference invitees, identify communication addresses for the missing conference invitees, and contact the missing conference invitees during a conference.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects, its sole purpose is to present some concepts of one or more aspects in a simplified form as a prelude to the more detailed description that is presented later.

One aspect as set out in the appended claims relates to a method for establishing a conference call. The method includes receiving, at a server, a registration request for the conference call with one or more participants. The method also includes sending a notification to the one or more participants with an invitation comprising conference call information to join the conference call. In addition, the method includes receiving a request from at least one participant to join the conference call by selecting the conference call information in the invitation. The method further includes establishing the conference call with the at least one participant.

Another aspect relates to at least one processor configured to establish a conference call. The processor may include a first module for receiving a registration request for the conference call with one or more participants, in addition, the processor may include a second module for sending a notification to the one or more participants with an invitation comprising conference call information to join the conference call. Moreover, the processor may include a third module for receiving a request from at least one participant to join the conference call by selecting the conference call information in the invitation. The processor may also include a fourth module for establishing the conference call with the at least one participant.

Yet another aspect relates to a computer program product. The computer program product includes a computer-readable medium including at least one instruction for causing a computer to receive a registration request for a conference call with one or more participants. The computer-readable medium also includes at least one instruction for causing the computer to send a notification to the one or more participants with an invitation comprising conference call information to join the conference call. The computer-readable medium further includes at least one instruction for causing the computer to receive a request from at least one participant to join the conference call by selecting the conference call information in the invitation. In addition, the computer-readable medium includes at least one instruction for causing the computer to establish the conference call with the at least one participant.

Another aspect relates to an apparatus. The apparatus includes means for receiving a registration request for a conference call with one or more participants. The apparatus also includes means for sending a notification to the one or more participants with an invitation comprising conference call information to join the conference call. The apparatus additionally includes means for receiving a request from at least one participant to join the conference call by selecting the conference call information in the invitation. The apparatus also includes means for establishing the conference call with the at least one participant.

Still another aspect relates to an apparatus for establishing a conference call. The apparatus may include a conference manager operable to receive a registration request for the conference call with one or more participants. In addition, the apparatus may include a notification component operable to send a notification to the one or more participants with an invitation comprising conference call information to join the conference call. The apparatus may also include the conference manager being further operable to receive a request from at least one participant to join the conference call by selecting the conference call information in the invitation. Further, the apparatus may include a communication component operable to establish the conference call with the at least one participant.

Another aspect relates to a method for joining a conference call. The method includes receiving, at a wireless device, an invitation to join one or more conference calls. In addition, the method includes selecting a first conference call to join. The method also includes directly joining the first conference call based on an identification associated with the wireless device.

Yet another aspect relates to at least one processor for joining a conference call. The processor may include a first module for receiving an invitation to join one or more conference calls. The processor may further include a second module for selecting a first conference call to join. In addition, the processor may include a third module for directly joining the first conference call based on an identification associated with a wireless device.

Another aspect relates to a computer program product. The computer program product includes a computer-readable medium including at least one instruction for causing a computer to receive an invitation to join one or more conference calls. The computer-readable medium also includes at least one instruction for causing the computer to select a first conference call to join. The computer-readable medium may further include at least one instruction for causing the computer to directly join the first conference call based on an identification associated with a wireless device.

Still another aspect relates to an apparatus. The apparatus includes means for receiving an invitation to join one or more conference calls. The apparatus may additionally include means for selecting a first conference call to join. The apparatus also includes means for directly joining the first conference call based on an identification associated with a wireless device.

Another aspect relates to an apparatus for joining a conference call. The apparatus may include a component operable to receive an invitation to join one or more conference calls. In addition, the apparatus may further include the component being further operable to select a first conference call to join. The apparatus may further include a communication component operable to directly join the first conference call based on an identification associated with a wireless device.

To the accomplishment of the foregoing and related ends, the one or more aspects comprise the features hereinafter described in more detail and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig, 1 is an illustration of a connectivity system in accordance with an aspect;
Fig. 2 is an illustration of an example conference data store in accordance with another aspect;
Fig. 3 is an illustration of an example table storing conference information in accordance with yet another aspect;
Fig. 4 is a flow chart illustrating a method for establishing a conference call in accordance with another aspect;
Fig. 5 is a flow chart illustrating a method for joining a conference call in accordance with yet another aspect;
Fig. 6 is a flow chart illustrating a method for connecting a caller to a conference call in accordance with an aspect;
Fig. 7 is a flow chart illustrating a method for placing one or more participants directly into a conference call in accordance with another aspect;
Fig. 8 is an example wireless device operable within the connectivity system in accordance with an aspect;
Fig. 9 is an example server device operable within the connectivity system in accordance with yet another aspect;
Fig. 10 is an illustration of an example system that facilitates establishing a conference call in accordance with another aspect; and
Fig. 11 is an illustration of an example system that facilitates joining a confcrcncc call in accordance with still another aspect.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The described aspects relate to methods and systems for providing conferencing services for wireless devices. The conferencing services may include setting up a conference call from a wireless device interface and/or receiving an invitation for a conference call on a wireless device. In an aspect, a host for a conference call (e.g., an individual that sets up a conference call) may select one or more individuals associated with the host to join the conference call. In another aspect, a host for a conference call may establish a conference call spontaneously, e.g., without setting a time in advance for the conference call to occur.

In addition, the described aspects relate to methods and systems for notifying one or more individuals that the individuals have been selected as participants in a conference call. In an aspect, a conferencing server may send a message to each of individuals with an invitation to join the conference call. In another aspect, the conferencing server may place telephone calls to each of the individuals with an invitation to join the conference call.

The described aspects also relate to methods and systems for placing an individual into a conference call. In an aspect, a caller may be placed into the conference call by responding to an invitation to join the conference call without having to enter in a pass code or dial a separate telephone number to join the conference call.

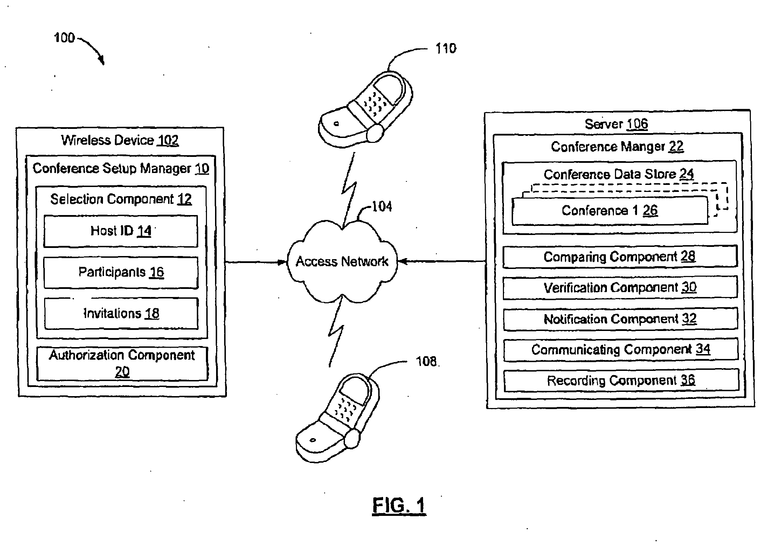

Referring now to **Fig. 1****,** illustrated is an example connectivity system 100 that includes one or more wireless devices 102, 108, 110 communicating through one or more access networks 104 with one or more servers and/or computing devices 106. Wireless devices 102, 108, 110 may include any mobile, portable computing or communications device, such as a cellular device, that may connect to an access network 104. Each of wireless devices 102, 108, 110 may be, for example, a cellular telephone, a navigation system, a computing device, a camera, a PDA, a music device, a gaming device, or a handheld device having wireless connection capability, among other devices. Server/computing device 106 may include any mobile or fixed computing device connected to a network. Server/computing device 106 may include, but is not limited to, a computing device, a server, a cellular telephone, a camera, a PDA, a music device, a gaming device, a navigation system, or a handheld device having wireless connection capability, among other devices.

In addition, access network 104 may provide one or more types of communication connections, such as any type of wireless airlink, to wireless devices 102, 108, 110 and server 106. Wireless devices 102, 108, 110 may place and/or receive a communication, e.g., a telephone call, a conference call, a video conferencing call, an Internet Protocol session, a Voice Over Internet protocol (IP) call, a short message service (SMS) message, a multimedia messaging service (MMS) message, an instant messaging (IM) service message, a chat or net-meeting related connection, a video, music, or data transfer, among other communications, via access network 104 to and/or from one or more servers 106. In addition, wireless devices 102, 108, 110 may receive a communication via access network 104 from one or more servers 106, or from any other device in communication with access network 104.

Wireless device 102 may include a conference setup manager component 10 operable to send a conference call registration request to establish a conference call with one or more participants. The conference call may include, but is not limited to, a telephone conference call, a video conference call, and a VoIP conference call, among other conference calls. The conference call may be at a designated time in the future, e.g., at 3:00 p.m. on the following day. For example, a conference host, e.g., a user of wireless device 102, may use the conference setup manager component 10 to establish a confcrcncc call with the users of wireless devices 102 and 104 at a designated time in the future.

In addition, the conference call may be established spontaneously without scheduling the call in advance. For example, a conference host may select one or more participants for a conference call that would occur once the participants respond to the invitation. Thus, the conference call may occur dynamically as the host and/or participants join the conference call.

In addition, the conference setup manager component 10 may include a selection component 12 operable to select the one or more participants 16 for a conference call. Participants 16 may include, but are not limited to, contacts stored in a data repository associated with the wireless device 102 user (e.g., friends, family, social networking contacts, coworkers, service providers, physicians, and businesses, etc.), an individual with a telephone number, an individual with an e-mail address, or any other individual with some form of identification.

The selection component 12 may also be operable to select one or more invitations 18 to send to the participants 16 of the conference call inviting the participants 16 to the conference call. Invitations 18 may include, but are not limited to, short message server (SMS) messages, multimedia messaging service (MMS) messages, e-mail messages, telephone calls, social networking messages (e.g., a Tweet and a Facebook update and/or message), web broadcasts, advertisements, links to the conference, and instant messages, among other forms of preparing and announcing a conference call. For example, the selection component 12 may allow a script to be selected that enables the conference host to select the participants 16 that the host would like to invite to the conference call and enables the host to select the method for forwarding the invitations to the participants 16 of the conference (e.g., via SMS messages, emails, and direct telephone calls). The selection component 12 may further be operable to select host identification (ID) 14 for identifying the host of the conference call. The host ID 14 may be, for example, a host's name, a host's photograph, a host's telephone number, e.g., the telephone number for wireless device 102, and an address for the host (e.g., an e-mail address or mailing address), among other forms of identifying the host of the conference call.

In an aspect, the selection component 12 may receive inputs from the user and/or other wireless device and server components with the host ID 14, the participants 16, and/or the invitations 18. For example, selection component 12 may rcccivc inputs from other wireless device and server components, such as, but not limited to, a memory or database, a clock, a position location module, a camera, a microphone, a wired or wireless communication interface, a keypad, or a touch sensitive display, among others sources of inputs.

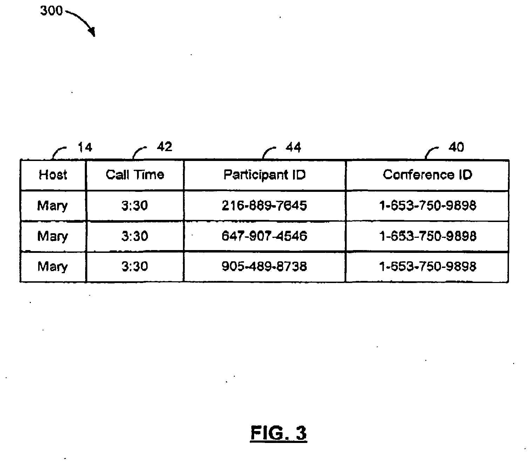

The selection component 12 may interface with the conference setup manger 10 and forward a request with the selected conference information, e.g., participants 16, invitations 18 and host ID 14, to the conference manager 22 on server 106. For example, a host may use conference set up manager 10 to set up a conference with three participants. The host may select the participants from a list of possible invitees and/or contacts associated with the host. The list may include, for example, the names of contacts from a contact data store associated with the host's wireless device. In addition, the host may select to invite the participants via SMS messages. The conference setup manager 10 may forward the conference information selected by the host to the conference manager 22. The conference manager 22 may store the requested details for the conference 26 in a conference data store 24. For example, the conference information may be stored in a similar manner as illustrated in **Fig. 3****.**

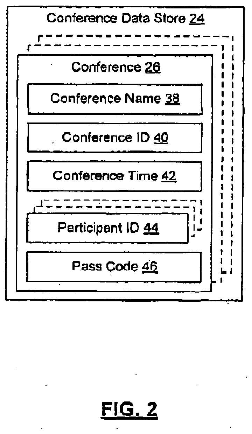

Referring now to **Fig. 3****,** illustrated is an example table 300 for storing conference information in accordance with an aspect. Table 300 may include host information for the requested conference 26. The host information may include the host ID 14 (**Fig. 1**), such as the host's name, the host's photograph, and the host's telephone number, among other host identifications. In addition, table 300 may include a call time 42 (**Fig. 2**) for the conference 26, such as the time of day when the participants 16 (**Fig. 1**) should connect to the conference 26. Table 300 may further include one or more participant IDs 44 (**Fig. 2**) for the one or more participants invited to join the conference 26. Table 300 may also include a conference ID 40 (**Fig. 2**) for accessing the conference 26, such as a telephone number for accessing the conference 26. It should be appreciated that each participant in the conference may be stored in a separate entry in table 300.

Referring back to **Fig. 1**, Conference manager 22 may receive conference information for one or more conferences 26 from one or more conference setup managers 10. Thus, each conference 26 may be stored as a separate entry in the conference data store 24, as illustrated in **Fig. 2**.

Referring now to **Fig. 2**, illustrated is an example conference data store 24 storing one or more conferences 26, according to one aspect. Conference 26 may include one or more conference names 38 and/or conference identifications (ID) 40 that identify the conference 26. The conference ID 40 may include, but is not limited to, the telephone number for the conference call, a destination address for server 106, a channel ID that identifies the name of the channel where the conference is occurring, and/or a randomly generated number, among other conference IDs. In addition, conference 26 may also include a conference time 42 for the conference call. The conference time 42 may be the time of day when the participants of the conference call should connect to the conference call.

The conference 26 may further include one or more participant identifications (IDs) 44 for identifying the one or more participants 16 (**Fig. 1**) invited to the conference 26. Participant identifications 44 may include, but are not limited to, caller identification for the participants 16 (e.g., the telephone number of each participant's communication device), SIM card numbers for each participant's wireless device, each participant's location, bio identification, face recognition, and retinal recognition, among other forms of identifying an individual.

In addition, conference 26 may include a pass code 46 for accessing the conference call. In an aspect, the pass code 46 may be the participant ID 44. For example, the caller ID of the participant may be used as the pass code for accessing the conference call. The pass code 46 may also be a numeric code that may be entered, for example, on a telephone and/or computer by a participant in the conference call to join the conference call.

Referring back to **Fig. 1**, conference manager 22 may also include a notification component 32 operable for notifying one or more participants 16 of one or more conferences 26 that the participants 16 are invited to join. In an aspect, the notification component 32 may tailor the type of notification received by the one or more participants 16 based upon the type of invitations 18 selected by the host of the conference. For example, the host may select that one participant should receive an SMS message with an invitation to the conference while another participant should receive a telephone call with an invitation to the conference. In another aspect, the notification component 32 may tailor the type of notification received by the participants based upon the participants' communication device capability, e.g., whether the communication device is capable of accepting SMS messages. Thus, a variety of communication paths may be used to invite the participants to a conference call.

Conference manager 22 may also include a communication component 34 operable to receive an incoming call from a caller attempting to join a conference 26. The communication component 34 may interface with a verification component 30 to verify whether the caller is a participant in the conference 26. The verification module may use a comparing component 28 to compare the incoming caller ID, such as the participant's telephone number, with the one or more participant IDs 44 (**Fig. 2**) for the conference 26 and verify whether the caller may join the conference 26. In an aspect, the conference setup manager 10 on wireless device 102 may also include an authorization component 20 operable for authorizing one or more participants in a conference call.

Conference manager 22 may also include a recording component 36 operable for recording the one or more conferences 26 and storing the recorded conferences. For example, if one or more participants are unable to join the conference call, the recording component 36 may record and store the conference so that participants may access the recorded conference at a later time. It should be appreciated that the recording component 36 may interface with verification component 30 to ensure that only authorized individuals, e.g., participants invited to the original conference call, have access to the recorded conference calls.

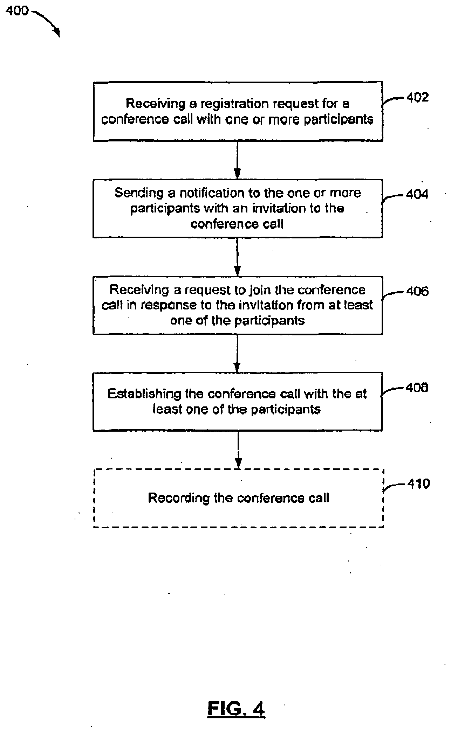

Referring now to **Fig. 4**, a method 400 for establishing a conference call in accordance with an aspect includes, at 402, receiving a registration for a conference call with one or more participants. For example, a conference server may receive a request from a host for a conference call to be set up with one or more participants. The host may select the participants from a list of possible invitees and/or contacts associated with the host. The list may include, for example, the names of contacts from a contact data store associated with the host's wireless device.

In addition, the conference server may receive the type of invitation and/or announcement selected by the host to send to the participants of the conference call. The type of invitations may include, but are not limited to, SMS messages, MMS messages, e-mail messages, telephone calls, a social networking messages (e.g., a Tweet and a Facebook update and/or message), a web broadcast, an advertisement, a link to the confcrcncc, and instant messages, among other forms of preparing and announcing a conference call.

For example, if the host wants to schedule a conference call for a large number of participants, e.g., a call to introduce a new product provided by the host or to advertise a scrvicc provided by the host, the host may select to generate an invitation to the participants using a web broadcast. In another aspect, the host may select to send an invitation for a conference call to one or more social networking contacts associated with the host. Therefore, the host may be capable of inviting a large number of participants to a conference call using a single invitation.

The method may include sending a notification to the one or more participants with an invitation to the conference call 404. The notification may include information about the conference call, such as the conference call time and date, the conference call name, the host for the conference call, and the number to dial to access the conference call.

For example, the conference participant may receive an SMS message on the participant's wireless device with information for a conference call at 3:30 p.m. the same day. The SMS message may include the host information and a telephone number to select by clicking or otherwise, depending on the participant's wireless device operating system and user interface, to dial the conferencing server and access the conference call at 3:30 p.m.

The method may include receiving a request to join the conference call in response to the invitation from at least one of the participants 406. The request to join the conference call may include the participant dialing into the conference call as instructed in the invitation, e.g., by selecting the telephone number in the notification with the invitation to join the conference call or dialing the telephone number with an access code from a different communication device.

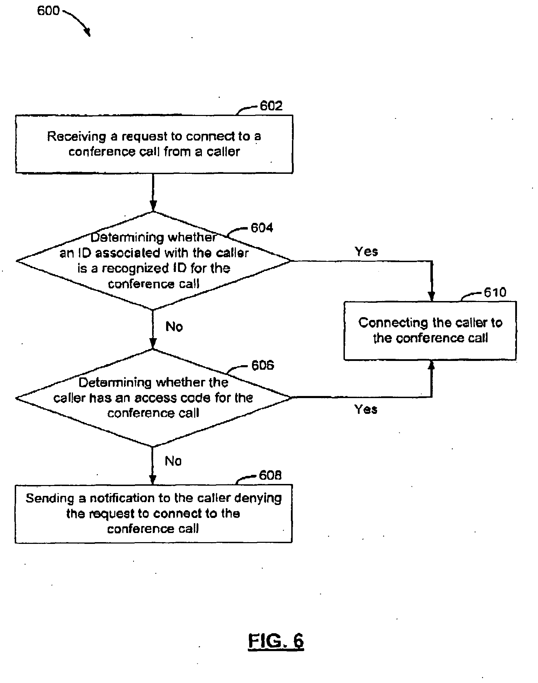

In accordance with one aspect, the method may also include establishing the conference call with the at least one of the participants 408. For example, when the conferencing server receives the request to join the conference from the participant, the conferencing server, may connect the participant to the host's conference as described in the participants conference invitation. As discussed in more detail below in regards to Fig. 6, the conferencing server may authenticate the participant to ensure that the participant should be allowed to join the requested conference.

The method may optionally include recording the conference call 410. The conferencing server may record the pending conference call and store the recorded conference call. For example, if one or more participants to the conference call are unable to attend the conference call and/or join the conference call after the call has started, the participants may access the recorded conference call to listen to the portions of the conference call the participant missed.

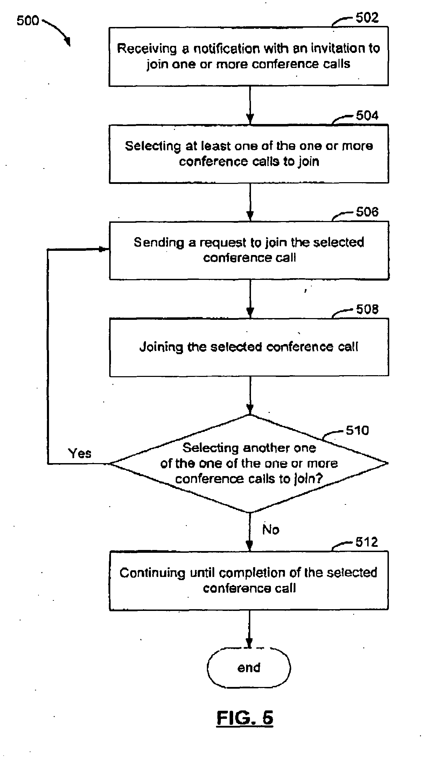

Referring now to **Fig. 5**, a method for joining a conference call in accordance with an aspect includes receiving a notification with an invitation to join one or more conference calls 502. As discussed above in 404 (**Fig. 4**), a participant in a conference call may receive a notification, such as an SMS message with an invitation to join a conference. In an aspect, after a participant's caller ID is verified at the conferencing server, a list of available teleconferences may be displayed to the participant on an interface of the wireless device.

For example, a participant may be invited to three conference calls on the same day. The first conference call may be with a first host at 3:30 p.m., and the second conference call may be with a second host at 5:15 p.m. In addition, the participant may be invited to a third conference call and with a third host at 7:30 p.m. It should also be appreciated that the different conference calls may be with the same host but during different times of the day. In addition, the participant may be invited to conference calls that are occurring simultaneously, e.g., conference calls where a portion of each conference call or the entire conference calls occur during the same portion of the day.

The method may include selecting at least one of the one or more conference calls to join 504. In an aspect, the participant may select a number on the wireless device to select a conference call to join. For example, when the participant calls in to join a teleconference, the participant may hear a recorded message, such as: "You have three pending teleconferences to choose from. To attend a 3:30 p.m. conference with host 1, please press 1. To attend a 5:15 p.m. conference with host 2, please press 2. To attend a 7:30 p.m. conference with host 3, please press 3." Thus, the host may record the host's name to be played to the participant to identify the conference call for the host.

In another aspect, the recorded message may include a telephone number for the host instead or in addition to of the host's name. For example, the recorded message may be: "You have three pending teleconferences to choose from. To attend a 3:30 p.m. conference with 347-897-0098, please press 1. To attend a 5:15 p.m. conference with 514-673-9834, please press 2. To attend a 7:30 p.m. conference with 416-785-4421, please press 3."

In another aspect, a menu may be displayed on an interface on the wireless device with one or more conferences for the participant to select to join. For example, the participant may highlight a conference from a drop down menu listing the available conferences to join.

In accordance with one aspect, the method may include sending a request to join the selected conference call 506. The request may be in response to the participant selecting a conference call to join in 504.

Further, the method may include joining the selected conference call 508. The conferencing system may connect the participant to the selected conference call in response to receiving a request to join the conference call. For example, when the participant presses 1 to attend the first conference call, the conferencing server may connect the participant to the conference call. In addition, the conferencing system may authenticate the participant using the incoming caller ID information before connecting the participant to the selected conference call, as discussed below in regards to **Fig. 6****.**

The method may include selecting another one of the one or more conferences to join 510. If the participant is invited to attend more than one conference, and the participant selects another one of the conferences to join, the method may follow to 506, where the participants sends a request to join the selected conference call. The participant may switch between two or more conferences by disconnecting from a first conference call and/or placing the first conference call on hold and joining a second conference call. For example, the participant may use menu options and/or telephone keys, among other input mechanisms that enable the feature of selecting one or more conferences to join.

For example, if a participant is invited to a concurrent conference call with a first host and a second host, during the conference with the first host, the participant may wish to connect with the second host. The participant may switch over to the conference with the second host and switch back to the conference with the first host, as desired by using menu options and/or telephone keys to select the different conferences to join.

If the participant does not select another conference to join, the method may include continuing until completion of the selected conference call 512. In an aspect, participants may be sent live updates of the changes in conferences that the participants are invited to and/or when another conference may be starting. For example, the updates may include a message, such as "you are now in Conference A and can switch in two minutes to Conference B." It should be appreciated that the user may receive the updates through a variety of communication paths including, but not limited to, an SMS message, a social networking message, an MMS message, an instant message, and an e-mail message, among other communication paths. Thus, the participants may be updated in near real time of what conferences the participants may join.

Referring now to **Fig. 6**, a method for connecting a caller to a conference call in accordance with an aspect includes, at 602, receiving a request to connect to a conference call from a caller. As discussed above in 406 (**Fig. 4**), the conferencing server may receive an incoming call from a caller in response to an invitation to join one or more conference calls. For example, a participant may select, by clicking or otherwise a telephone number in an invitation message for a conference call which may automatically dial the conferencing server.

In one aspect, the method includes determining whether identifications (ID) associated with the caller are a recognized ID for the conference call 604. The conferencing server may have a verification module that compares an incoming identification of the caller with a data store containing the one or more participants that are invited to the conference call. The identification of the caller may include, but is not limited to, caller identification (e.g., the telephone number of the wireless device the caller is making the call from), a SIM card number of the wireless device, the location of the caller, bio identification, face recognition from a photograph of the caller, retinal recognition for the caller, and a social media identification.

For example, a host may select a participant for a conference call at 3:30 p.m. later in the day. When the participant dials the conferencing server, the conferencing server may compare the incoming caller ID of the participant and compare the caller ID with the information the host provided for the conference call at 3:30 p.m.

If the identification of the caller is a recognized ID for the conference call, the method may include connecting the caller to the conference call 610. If a match occurs at the conferencing center between the caller's identification and the information provided by the host for the participants of the conference call, the conferencing center may connect the caller to the conference call.

If the identification of the caller is not a recognized ID for the conference call, the method may include determining whether the caller has an access code for the confcrcncc call 606. In an aspect, the caller may not be calling into the conference call using the wireless device associated with the participant for the conference call. Thus, the incoming caller ID may not match a recognized ID for the conference call. The participant may use a pass code for accessing the conference call that was forwarded in the invitation for the confcrcncc. The conferencing server may determine whether an access code was entered by the caller for accessing the conference call. For example, the caller may enter in the access code by using DTMF tones from the communication device the caller is calling from.

If the caller has an access code for the conference call, the method may include connecting the caller to the conference call 610. The conferencing server may determine whether the access code is the correct pass code for accessing the conference call, and connect the caller to the conference call if the access code is correct.

If, however, the caller does not have an access code for the conference call, the method may include sending a notification to the caller denying the request to connect to the conference call 608. The notification may include information explaining why the caller was not able to connect to the conference call and providing one or more different options for the caller for connecting to the conference call. For example, the notification may notify the caller that an improper access code was entered for joining the conference call. In addition, the notification may include notifying the caller that the caller identification is not a recognized identification for the conference call.

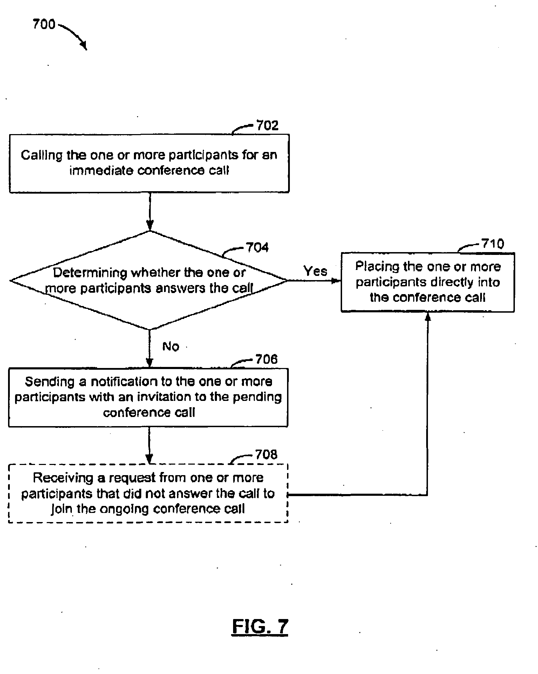

Referring now to **Fig. 7**, a method for placing one or more participants directly into a conference call in accordance with an aspect includes calling the one or more participants for an immediate conference call 702. In an aspect, a host may decide to have an immediate conference call by calling the one or more participants in the conference call. For example, the host for a conference call may select an option for inviting the participants to the conference call via telephone call during the setup of the conference. The conferencing server may receive the request from the host with the selection of telephone call as the method of inviting the specified participants to the conference call. The conferencing server may initiate the outbound calls to each participant selected for the conference call.

For example, the conferencing server may send a message to a Session Initiation Protocol (SIP) server or a database with a request to call specified contacts in a message header. The SIP server or database would then telephone the specified invitees, i.e., participants, for the conference call. In another aspect, the host may want to patch an individual into a pending conference call. For example, the host may select to invite the individual by telephone and the conferencing server may dial the selected invitee.

In one aspect, the method may include determining whether the one or more participants have answered the call 704. In an aspect, the conferencing server may detect that the participant has not answered the telephone call. For example, the conferencing server may detect that the participant's voicemail is turned on. In addition, or alternatively, the conferencing server may use a predetermined number of rings before determining whether the participant has answered the telephone call. For example, if the participant's telephone rings six times, the conferencing server may determine that the participant did not answer the telephone call.

If the one or more participants have answered the call, the method may include placing the one or more participants directly into the conference call 710. For example, if the participant answers the telephone call, the participant may be placed into the conference call immediately. In another aspect, the participant may receive a message upon answering the telephone call indicating that the participant would be immediately placed into a conference call. For example, the participant may hear a message, such as "You are being connected to a conference call initiated by [name of the host]." Thus, the participant may be placed into the conference without having to independently connect to the conference, dial the conferencing server, or enter a pass code to access the conference.

If the one or more participants do not answer the call, the method may include sending a notification to the one or more participants with an invitation to the pending conference call 706. Upon detecting that the participant did not answer the telephone call, the conferencing server may disconnect the call and send a notification to the one or more participants that did not answer the call with an invitation to the pending conference call. The notification may be similar to the ones discussed above in 404 (**Fig. 4**). For example, three participants to a conference call may answer the call and may be immediately added to the conference call, while the two participants in the conference call who did not answer the call may receive an SMS message indicating that the participants have been invited to join a pending teleconference with a number linking the participant to the teleconference.

The method may optionally include, receiving a request from one or more participants that did not answer the call to join the ongoing conference call 708. In accordance with one aspect, the method may include placing the one or more participants directly into the conference call 710. The conferencing server may receive a request to join the conference call which may be similar to the request discussed above in 406 (**Fig. 4**). For example, the participant may click on or otherwise select the telephone number received in the notification and may be immediately placed into the pending conference call. In an aspect, the conferencing server may authenticate the participant before connecting the participant to the pending conference call, as discussed, for example, in **Fig. 6****.**

Therefore, a host for a conference may have the flexibility to setup conferences spontaneously without prearranging a set date/time in the future to conduct the conference call. The conferencing server may call one or more invitees for a conference call upon receiving a request by a host for an immediate conference call. In addition, since the conferencing server initiates the calls individually to the one or more invitees, multiple forms of communication may be used during the conference call based upon the capabilities of the communication devices of the one or more invitees. For example, the conferencing server may call one invitee on a landline telephone, while calling another invitee on a wireless device. In addition, the conferencing system may call another invitee on a VoIP application on a computing device. Thus, the invitees are not limited in the manner of connecting to the conference call and may have flexibility in selecting a communication medium for connecting to the conference call.

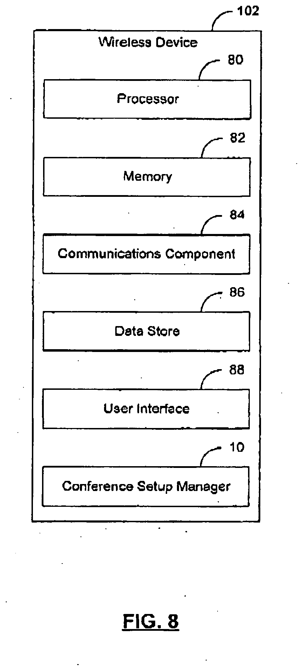

Referring now to **Fig. 8**, illustrated is an example wireless device 102 operable within the connectivity system in accordance with an aspect. In one aspect, wireless device 102 may include a processor 80 for carrying out processing functions associated with one or more of components and functions described herein. Processor 80 can include a single or multiple set of processors or multi-core processors. Moreover, processor 80 can be implemented as an integrated processing system and/or a distributed processing system.

Wireless device 102 may further include a memory 82, such as for storing local versions of applications being executed by processor 80. Memory 82 can include a type of memory usable by a computer, such as random access memory (RAM), read only memory (ROM), tapes, magnetic discs, optical discs, volatile memory, non-volatile memory, and any combination thereof.

Further, wireless device 102 includes a communications component 84 that provides for establishing and maintaining communications with one or more parties utilizing hardware, software, and services as described herein. Communications component 84 may carry communications between components on wireless device 102, as well as between wireless device 102 and external devices, such as devices located across a communications network and/or devices serially or locally connected to wireless device 102. For example, communications component 84 may include one or more buses, and may further include transmit chain components and receive chain components associated with a transmitter and receiver, respectively, operable for interfacing with external devices.

Additionally, wireless device 102 may further include a data store 86, which can be any suitable combination of hardware and/or software, that provides for mass storage of information, databases, and programs employed in connection with aspects described herein. For example, data store 86 may be a data repository for applications not currently being executed by processor 80.

Wireless device 102 may additionally include a user interface component 88 operable to receive inputs from a user of wireless device 102 and further operable to generate outputs for presentation to the user. User interface component 88 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component 88 may include one or more output devices, including but not limited to a display, a speaker, a haptic feedback mechanism, a printer, any other mechanism capable of presenting an output to a user, or any combination thereof.

Wireless device 102 may further include a conference setup manager component 10 operable to send a conference call registration request to establish a conference call with one or more participants.

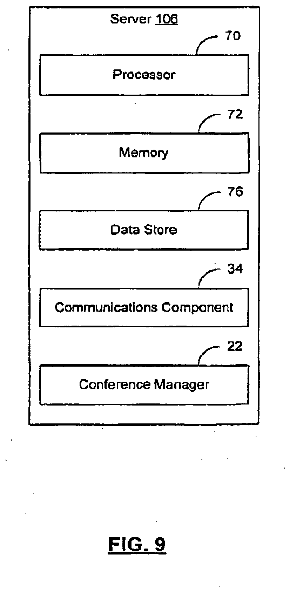

Referring now to **Fig. 9**, illustrated is an example server device 106 operable within the connectivity system in accordance with yet another aspect. Server 106 manages network connectivity matters for access network 104. Server 106 includes processor component 70 for carrying out processing functions associated with one or more of components and functions described herein. Processor component 70 can include a single or multiple set of processors or multi-core processors. Moreover, processing component 70 can be implemented as an integrated processing system and/or a distributed processing system.

Server 106 further includes a memory 72, such as for storing local versions of applications being executed by processor component 70. Memory 72 can include random access memory (RAM), read only memory (ROM), and a combination thereof.

Further, server 106 includes a communications component 34 that provides for establishing and maintaining communications with one or more parties utilizing hardware, software, and services as described herein. Communications component 34 may carry communications between components on server 106, as well as between server 106 and external devices, such as devices located across a communications network and/or devices serially or locally connected to server 106.

Additionally, server 106 may further include a data store 76, which can be any suitable combination of hardware and/or software, that provides for mass storage of information, databases, and programs employed in connection with aspects described herein. For example, data store 76 may be a data repository for applications not currently executing. Server 106 may additionally include a conference manager component 22 operable to receive conference information for one or more requested conference and establish the conference with the participants of the conference.

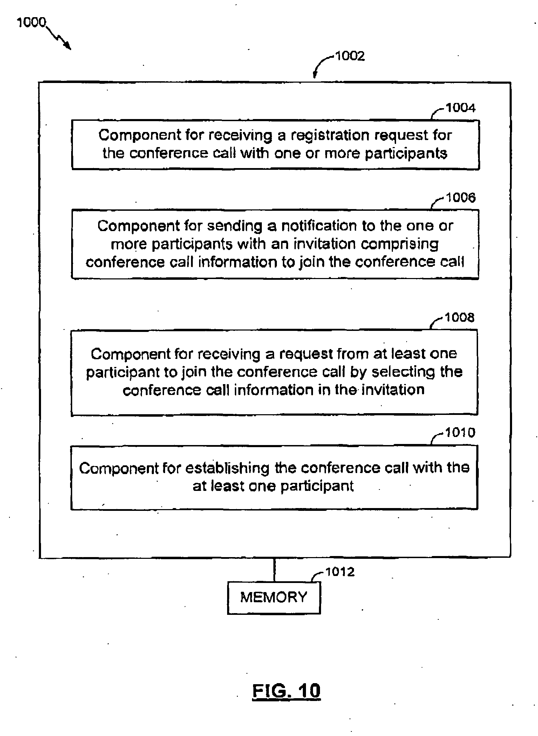

Referring now to **Fig. 10**, illustrated is a system 1000 configured to establish a conference call in accordance with an aspect. For example, system 1000 can reside at least partially within a transmitter, mobile device, *etc.* It is to be appreciated that system 1000 is represented as including functional blocks, which can be functional blocks that represent functions implemented by a processor, software, or combination thereof (*e.g*., firmware). System 1000 includes a logical grouping 1002 of electrical components that facilitate establishing a conference call. For instance, logical grouping 1002 may include component 1004 for receiving a registration request for the conference call with one or more participants. Further, logical grouping 1002 may comprise component 1006 for sending a notification to the one or more participants with an invitation comprising conference call information to join the conference call. In addition, logical grouping 1002 may include component 1008 for receiving a request from at least one participant to join the conference call by selecting the conference call information in the invitation. Logical grouping 1002 may also include component 1010 for establishing the conference call with the at least one participant. Additionally, system 1000 can include a memory 1012 that retains instructions for executing functions associated with electrical components 1004, 1006, 1008, and 1010. While shown as being external to memory 1012, it is to be understood that one or more of electrical components 1004, 1006, 1008, and 1010 can exist within memory 1012.

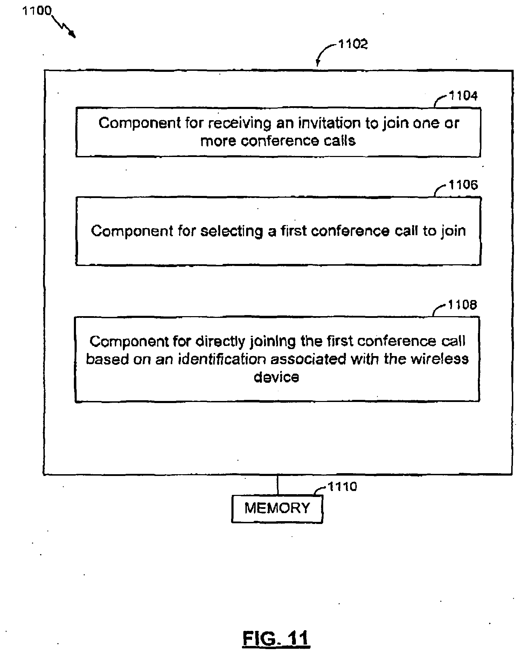

Referring now to **Fig. 11**, illustrated is a system 1100 configured to join a conference call. For example, system 1100 can reside at least partially within a transmitter, mobile device, *etc.* It is to be appreciated that system 1100 is represented as including functional blocks, which can be functional blocks that represent functions implemented by a processor, software, or combination thereof (*e.g*., firmware). System 1100 includes a logical grouping 1102 of electrical components that facilitate joining a conference call. For instance, logical grouping 1102 may include component 1104 for receiving an invitation to join one or more conference calls. Further, logical grouping 1102 may comprise component 1106 for selecting a first conference call to join. In addition, logical grouping 1102 may include component 1108 for directly joining the first conference call based on an identification associated with the wireless device. Additionally, system 1100 can include a memory 1110 that retains instructions for executing functions associated with electrical components 1104, 1106, and 1108. While shown as being external to memory 1110, it is to be understood that one or more of electrical components 1104, 1106, and 1108 can exist within memory 1110.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95, and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM , etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE, and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g*., mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave arc included in the definition of medium. Disk and disc, as used herein, includes compact disc (CD), laser disc, optical disc, digital versatile disc (DVD), floppy disk, and blu-ray disc where disks usually reproduce data magnetically, while discs usually reproduce data optically with lasers. Combinations of the above should also be included within the scope of computer-readable media.

The embodiments and the aspects described above which do not fall within the scope of the claims are to interpreted as examples.

The scope of the invention is limited by the appended claims.

## Claims

1. A method for establishing a conference call, the method comprising:
receiving, at a server, (106) a registration request for the conference call with one or more participants;
calling the one or more participants for an immediate conference call (702);
determining whether the one or more participants have answered the call (704);
sending a notification to the one or more participants who have not answered the call with an invitation to join the pending conference call (706);
receiving a request from the one or more participants that did not answer the call to join the pending conference call by selecting the conference call information in the invitation (708); and
placing the one or more participants that did not answer the call directly into the pending conference call upon receiving the request to join the pending conference call (710).

2. The method of claim 1, wherein the registration request farther comprises a communication path for inviting the one or more participants to the conference call.

3. The method of claim 2, wherein the communication path comprises one of an SMS message, an MMS message, a telephone call, an e-mail message, an instant message, a web broadcast, or a social networking message.

4. The method of claim 1, wherein the one or more participants are selected from a list of contacts associated with a host for the conference call.

5. The method of claim 1 , wherein the notification comprises one of an SMS message, an MMS message, a telephone call, an e-mail message, an instant message, a web broadcast, or a social networking message.

6. The method of claim 5, wherein the notification is tailored for each of the one or more participants based upon a communication device associated with the one or more participants.

7. The method of claim 1, the conference call information comprising one of a conference call name, an address for the conference call, a conference call identification, a conference call time, or a pass code for accessing the conference call.

8. The method of claim 1, wherein the address for the conference call is a destination address for the server.

9. The method of claim 8, farther comprising:
selecting a link to the destination address of the server.

10. The method of claim 1, further comprising:
authenticating the one or more participants that did not answer the call upon receiving a request from the one or more participants to join the conference call; and establishing the conference call with the at least one authenticated participant for the conference call.

11. The method of claim 10, wherein authenticating the at least one participant further comprises:
determining whether an identification associated with the at least one participant is a recognized identification for the conference call; and
connecting the at least one participant to the conference call if the identification is the recognized identification for the conference call.

12. The method of claim 11, wherein the identification associated with the at least one participant comprises one of a telephone number of a communication device, a SIM number of a wireless device, a location, or a bio identification.

13. The method of claim 11, wherein the recognized identification comprises one of a telephone number for a communication device, a SIM number for a wireless device, a location, or bio identification.

14. The method of claim 11, wherein the determining further comprises:
comparing the identification associated with the at least one participant with one or more recognized identifications for the conference call;
if the identification associated with the at least one participant matches at least one of the recognized identifications for the conference call, indicating the identification is the recognized identification for the conference call; and
if the identification associated with the at least one participant does not match at feast one of the recognized identifications for the conference call, indicating that the identification is not the recognized identification for the conference call.

15. The method of claim 11, further comprising:
determining whether the at least one participant has an access code for accessing the conference call; and
connecting the at least one participant to the conference call if the at feast one participant has the access code for accessing the conference call.

16. The method of claim 1, further comprising:
recording the established conference call; and
storing the recorded conference call.

17. A computer program product, comprising:
a computer -readable medium comprising:
at least one instruction for causing a computer to receive a registration request for a conference call with one or more participants;
at least one instruction for causing the computer to call the one or more participants for an immediate conference call;
at least one instruction for causing the computer to determine whether the one or more participants have answered the call;
at least one instruction for causing the computer to send a notification to the one or more participants who have not answered the call with an invitation to join the pending conference call;
at least one instruction for causing the computer to receive a request from the one or more participants that did not answer the call to join the pending conference call by selecting the conference call information in the invitation; and
at least one instruction for placing the one or more participants that did not answer the call directly into the pending conference call upon receiving the request to join the pending conference call.

18. An apparatus, comprising:
means for receiving a registration request for a conference call with one or more participants;
means for calling the one or more participants for an immediate conference call;
means for determining whether the one or more participants have answered the call;
means for sending a notification to the one or more participants who have not answered the call with an invitation to join the pending conference call;
means for receiving a request from the one or more participants that did not answer the call to join the pending conference call by selecting the conference call information in the invitation; and
means for placing the one or more participants that did not answer the call directly into the pending conference call upon receiving the request to join the pending conference call.

19. A method for joining a conference call, the method comprising:
receiving, at a wireless device, (102, 108, 110) a call for an immediate first conference call;
receiving at the wireless device (102, 108, 110) a notification with an invitation to join the first conference call if the wireless device (102, 108, 110) does not answer the received call;
sending by the wireless device (102, 108, 110) a request to join the pending conference call by selecting the conference call information in the invitation; and
connecting the wireless device (102, 108, 110) directly to the first conference call after sending the request to join the pending conference call.

20. The method of claim 19, further comprising:
selecting a second conference call to join.

21. The method of claim 20, further comprising:
switching to the second conference call.

22. The method of claim 21, wherein switching to the second conference call further comprises disconnecting from the first conference call.

23. The method of claim 20, wherein the first conference call and the second conference call are pending at the same time.

24. A computer program product, comprising:
a computer-readable medium comprising:
at least one instruction for causing a computer to receive a call for an immediate first conference call;
at least one instruction for causing a computer to receive a notification with an invitation to join the first conference call if the computer does not answer the received call;
at least one instruction for sending by the computer a request to join the pending conference call by selecting the conference call information in the invitation; and
at least one instruction for causing the computer to connect directly to the first conference call after sending the request to join the pending conference call.

25. An apparatus comprising:
means for receiving a call for an immediate first conference call;
means for receiving a notification with an invitation to join the first conference call if the apparatus does not answer the received call;
means for sending a request to join the pending conference call by selecting the conference call information in the invitation; and
means for connecting the apparatus directly to the first conference call after sending the request to join the pending conference call.

## Patentansprüche

1. Ein Verfahren zum Einrichten einer Telefonkonferenz bzw. eines Konferenzanrufs, wobei das Verfahren Folgendes aufweist:
Empfangen, an einen Server (106), einer Registrierungsanfrage hinsichtlich des Konferenzanrufs mit einem oder mehreren Teilnehmern;
Anrufen des einen oder den mehreren Teilnehmer für einen sofortigen Konferenzanruf (702);
Bestimmen, ob der eine oder die mehreren Teilnehmer den Anruf (704) beantwortet haben;
Senden einer Benachrichtigung an den einen oder die mehreren Teilnehmer, die den Anruf nicht beantwortet haben, mit einer Einladung, dem anstehenden bzw. laufenden Konferenzanruf (706) beizutreten;
Empfangen einer Anfrage von dem einem oder den mehreren Teilnehmern, die den Anruf nicht beantwortet haben, dem laufenden Konferenzanruf beizutreten durch Auswählen der Konferenzanrufinformation in der Einladung (708); und
direktes Platzieren bzw. Hinzufügen des einen oder der mehreren Teilnehmer, die den Anruf nicht beantwortet haben, zu dem laufenden Konferenzanruf auf Empfangen der Anfrage hin, dem laufenden Konferenzanruf (710) beizutreten.

2. Verfahren nach Anspruch 1, wobei die Registrierungsanfrage weiter einen Kommunikationspfad zum Einladen des einen oder der mehreren Teilnehmer zu dem Konferenzanruf aufweist.

3. Verfahren nach Anspruch 2, wobei der Kommunikationspfad eines von einer SMS-Nachricht, einer MMS-Nachricht, einem Telefonanruf, einer Email-Nachricht, einer Sofortnachricht bzw. Instant-Message, einem Web-Broadcast oder einer Nachricht eines sozialen Netzwerks aufweist.

4. Verfahren nach Anspruch 1, wobei der eine oder die mehreren Teilnehmer von einer Liste von Kontakten ausgewählt werden, die mit einem Veranstalter für den Konferenzanruf assoziiert ist.

5. Verfahren nach Anspruch 1, wobei die Benachrichtigung eines von einer SMS-Nachricht, einer MMS-Nachricht, einem Telefonanruf, einer Email-Nachricht, einer Sofortnachricht bzw. Instant-Message, einem Web-Broadcast oder einer Nachricht eines sozialen Netzwerks aufweist.

6. Verfahren nach Anspruch 5, wobei die Benachrichtigung für jeden der ein oder mehreren Teilnehmer zugeschnitten ist basierend auf einer Kommunikationseinrichtung, die mit dem einen oder den mehreren Teilnehmern assoziiert ist.

7. Verfahren nach Anspruch 1, wobei die Konferenzanrufinformation eines von einem Konferenzanrufnamen, einer Adresse für den Konferenzanruf, einer Konferenzanrufidentifikation, einer Konferenzanrufzeit oder einem Zugangscode für Zugang zu dem Konferenzanruf aufweist.

8. Verfahren nach Anspruch 1, wobei die Adresse für den Konferenzanruf eine Zieladresse für den Server ist.

9. Verfahren nach Anspruch 8, das weiter Folgendes aufweist:
Auswählen einer Verbindung bzw. eines Verweises zu der Zieladresse des Servers.

10. Verfahren nach Anspruch 1, das weiter Folgendes aufweist:
Authentifizieren des einen oder der mehreren Teilnehmer, die den Anruf nicht beantwortet haben, auf Empfangen einer Anfrage von dem einen oder den mehreren Teilnehmern, dem Konferenzanruf beizutreten; und
Einrichten des Konferenzanrufs mit dem wenigstens einen authentifizierten Teilnehmer für den Konferenzanruf.

11. Verfahren nach Anspruch 10, wobei das Authentifizieren des wenigstens einen Teilnehmers weiter Folgendes aufweist:
Bestimmen, ob eine Identifikation, die mit dem wenigstens einen Teilnehmer assoziiert ist, eine erkannte Identifikation für den Konferenzanruf ist; und
Verbinden des wenigstens einen Teilnehmers mit dem Konferenzanruf, wenn die Identifikation die erkannte Identifikation für den Konferenzanruf ist.

12. Verfahren nach Anspruch 11, wobei die Identifikation, die mit dem wenigstens einen Teilnehmer assoziiert ist, eines von einer Telefonnummer einer Kommunikationseinrichtung, einer SIM-Nummer einer Drahtloseinrichtung, einem Standort oder einer Bio-Identifikation ist.

13. Verfahren nach Anspruch 11, wobei die erkannte Identifikation eines von einer Telefonnummer für eine Kommunikationseinrichtung, einer SIM-Nummer für eine Drahtloseinrichtung, einem Standort oder einer Bio-Identifikation ist.

14. Verfahren nach Anspruch 11, wobei das Bestimmen weiter Folgendes aufweist:
Vergleichen der Identifikation, die mit dem wenigstens einen Teilnehmer assoziiert ist, mit einer oder mehreren erkannten Identifikationen für den Konferenzanruf;
wenn die Identifikation, die mit dem wenigstens einen Teilnehmer assoziiert ist, mit wenigstens einer der erkannten Identifikationen für den Konferenzanruf übereinstimmt, Anzeigen, dass die Identifikation die erkannte Identifikation für den Konferenzanruf ist; und
wenn die Identifikation, die mit dem wenigstens einen Teilnehmer assoziiert ist, nicht mit wenigstens einer der erkannten Identifikationen für den Konferenzanruf übereinstimmt, Anzeigen, dass die Identifikation nicht die erkannte Identifikation für den Konferenzanruf ist.

15. Verfahren nach Anspruch 11, das weiter Folgendes aufweist:
Bestimmen, ob der wenigstens eine Teilnehmer einen Zugangscode für Zugang zu dem Konferenzanruf hat; und
Verbinden des wenigstens einen Teilnehmers mit dem Konferenzanruf, wenn der wenigstens eine Teilnehmer den Zugangscode für Zugang zu dem Konferenzanruf hat.

16. Verfahren nach Anspruch 1, das weiter Folgendes aufweist:
Aufzeichnen des eingerichteten Konferenzanrufs; und
Speichern des aufgezeichneten Konferenzanrufs.

17. Ein Computerprogrammprodukt, das Folgendes aufweist:
ein computerlesbares Medium, das Folgendes aufweist:
wenigstens einen Befehl, um einen Computer zu veranlassen zum Empfangen einer Registrierungsanfrage hinsichtlich eines Konferenzanrufs mit einem oder mehreren Teilnehmern;
wenigstens einen Befehl, um einen Computer zu veranlassen zum Anrufen des einen oder der mehreren Teilnehmer für einen sofortigen Konferenzanruf;
wenigstens einen Befehl, um einen Computer zu veranlassen zum Bestimmen, ob der eine oder die mehreren Teilnehmer den Anruf beantwortet haben;
wenigstens einen Befehl, um einen Computer zu veranlassen zum Senden einer Benachrichtigung an den einen oder die mehreren Teilnehmer, die den Anruf nicht beantwortet haben, mit einer Einladung, dem anstehenden bzw. laufenden Konferenzanruf beizutreten;
wenigstens einen Befehl, um einen Computer zu veranlassen zum Empfangen einer Anfrage von dem einem oder den mehreren Teilnehmern, die den Anruf nicht beantwortet haben, dem laufenden Konferenzanruf beizutreten durch Auswählen der Konferenzanrufinformation in der Einladung; und
wenigstens einen Befehl, um einen Computer zu veranlassen zum direkten Platzieren bzw. Hinzufügen des einen oder der mehreren Teilnehmer, die den Anruf nicht beantwortet haben, zu dem laufenden Konferenzanruf auf Empfangen der Anfrage hin, dem laufenden Konferenzanruf beizutreten.

18. Eine Vorrichtung, die Folgendes aufweist:
Mittel zum Empfangen einer Registrierungsanfrage hinsichtlich des Konferenzanrufs mit einem oder mehreren Teilnehmern;
Mittel zum Anrufen des einen oder der mehreren Teilnehmer für einen sofortigen Konferenzanruf;
Mittel zum Bestimmen, ob der eine oder die mehreren Teilnehmer den Anruf beantwortet haben;
Mittel zum Senden einer Benachrichtigung an den einen oder die mehreren Teilnehmer, die den Anruf nicht beantwortet haben, mit einer Einladung, dem anstehenden bzw. laufenden Konferenzanruf beizutreten;
Mittel zum Empfangen einer Anfrage von dem einem oder den mehreren Teilnehmern, die den Anruf nicht beantwortet haben, dem laufenden Konferenzanruf beizutreten durch Auswählen der Konferenzanrufinformation in der Einladung; und
Mittel zum direkten Platzieren bzw. Hinzufügen des einen oder der mehreren Teilnehmer, die den Anruf nicht beantwortet haben, zu dem laufenden Konferenzanruf auf Empfangen der Anfrage, dem laufenden Konferenzanruf beizutreten.

19. Ein Verfahren zum Beitreten zu einem Konferenzanruf, wobei das Verfahren Folgendes aufweist:
Empfangen, an einer Drahtloseinrichtung (102, 108, 110), eines Anrufs für einen sofortigen ersten Konferenzanruf;
Empfangen, an einer Drahtloseinrichtung (102, 108, 110), einer Benachrichtigung mit einer Einladung, dem ersten Konferenzanruf beizutreten, wenn die Drahtloseinrichtung (102, 108, 110) den empfangenen Anruf nicht beantwortet;
Senden, durch die Drahtloseinrichtung (102, 108, 110), einer Anfrage, dem laufenden Konferenzanruf beizutreten durch Auswählen der Konferenzanrufinformation in der Einladung; und
Verbinden der Drahtloseinrichtung (102, 108, 110) direkt mit dem ersten Konferenzanruf nach Senden der Anfrage, dem laufenden Konferenzanruf beizutreten.

20. Verfahren nach Anspruch 19, das weiter Folgendes aufweist:
Auswählen eines zweiten Konferenzanrufs, dem beigetreten werden soll.

21. Verfahren nach Anspruch 20, das weiter Folgendes aufweist:
Schalten zu dem zweiten Konferenzanruf.

22. Verfahren nach Anspruch 21, wobei das Schalten zu dem zweiten Konferenzanruf weiter Verlassen des ersten Konferenzanrufs aufweist.

23. Verfahren nach Anspruch 20, wobei der erste Konferenzanruf und der zweite Konferenzanruf zu der gleichen Zeit anstehen bzw. stattfinden.

24. Ein Computerprogrammprodukt, das Folgendes aufweist:
ein computerlesbares Medium, das Folgendes aufweist:
wenigstens einen Befehl, um einen Computer zu veranlassen zum Empfangen eines Anrufs für einen sofortigen ersten Konferenzanruf;
wenigstens einen Befehl, um einen Computer zu veranlassen zum Empfangen einer Benachrichtigung mit einer Einladung, dem ersten Konferenzanruf beizutreten, wenn der Computer den empfangenen Anruf nicht beantwortet;
wenigstens einen Befehl, um einen Computer zu veranlassen zum Senden, durch den Computer, einer Anfrage, dem laufenden Konferenzanruf beizutreten durch Auswählen der Konferenzanrufinformation in der Einladung; und
wenigstens einen Befehl, um einen Computer zu veranlassen zum direkten Verbinden des Computers mit dem ersten Konferenzanruf nach Senden der Anfrage, dem laufenden Konferenzanruf beizutreten.

25. Eine Vorrichtung, die Folgendes aufweist:
Mittel zum Empfangen eines Anrufs für einen sofortigen ersten Konferenzanruf;
Mittel zum Empfangen einer Benachrichtigung mit einer Einladung, dem ersten Konferenzanruf beizutreten, wenn die Vorrichtung den empfangenen Anruf nicht beantwortet;
Mittel zum Senden einer Anfrage, dem laufenden Konferenzanruf beizutreten durch Auswählen der Konferenzanrufinformation in der Einladung; und
Mittel zum direkten Verbinden der Vorrichtung mit dem ersten Konferenzanruf nach Senden der Anfrage, dem laufenden Konferenzanruf beizutreten.

## Revendications

1. Procédé d'établissement d'une téléconférence, le procédé comprenant les étapes ci-dessous consistant à :
recevoir, au niveau d'un serveur (106), une demande d'inscription à la téléconférence comportant un ou plusieurs participants ;
appeler ledit un ou lesdits plusieurs participants pour une téléconférence immédiate (702) ;
déterminer si ledit un ou lesdits plusieurs participants ont répondu à l'appel (704) ;
envoyer une notification audit un ou auxdits plusieurs participants qui n'ont pas répondu à l'appel, avec une invitation à se joindre à la téléconférence en attente (706) ;
recevoir une demande en provenance dudit un ou desdits plusieurs participants qui n'ont pas répondu à l'appel visant à se joindre à la téléconférence en attente en sélectionnant les informations de téléconférence dans l'invitation (708) ; et
placer ledit un ou lesdits plusieurs participants qui n'ont pas répondu à l'appel directement dans la téléconférence en attente, suite à la réception de la demande invitant à se joindre à la téléconférence en attente (710).

2. Procédé selon la revendication 1, dans lequel la demande d'inscription comprend en outre un chemin de communication pour inviter ledit un ou lesdits plusieurs participants à la téléconférence.

3. Procédé selon la revendication 2, dans lequel le chemin de communication comprend l'un parmi un message SMS, un message MMS, un appel téléphonique, un message électronique, un message instantané, une diffusion web, ou un message de réseautage social.

4. Procédé selon la revendication 1, dans lequel ledit un ou lesdits plusieurs participants sont sélectionnés à partir d'une liste de contacts associée à un hôte pour la téléconférence.

5. Procédé selon la revendication 1, dans lequel la notification comprend l'un parmi un message SMS, un message MMS, un appel téléphonique, un message électronique, un message instantané, une diffusion web, ou un message de réseautage social.

6. Procédé selon la revendication 5, dans lequel la notification est personnalisée pour chacun dudit un ou desdits plusieurs participants sur la base d'un dispositif de communication associé audit un ou auxdits plusieurs participants.

7. Procédé selon la revendication 1, dans lequel les informations de téléconférence comprennent un nom de téléconférence, une adresse pour la téléconférence, une identification de téléconférence, une heure de téléconférence, ou un code de passe permettant d'accéder à la téléconférence.

8. Procédé selon la revendication 1, dans lequel l'adresse pour la téléconférence est une adresse de destination pour le serveur.

9. Procédé selon la revendication 8, comprenant en outre l'étape ci-dessous consistant à :
sélectionner un lien vers l'adresse de destination du serveur.

10. Procédé selon la revendication 1, comprenant en outre les étapes ci-dessous consistant à :
authentifier ledit un ou lesdits plusieurs participants qui n'ont pas répondu à l'appel suite à la réception d'une demande en provenance dudit un ou desdits plusieurs participants visant à se joindre à la téléconférence ; et
établir la téléconférence avec ledit au moins un participant authentifié pour la téléconférence.

11. Procédé selon la revendication 10, dans lequel l'étape d'authentification dudit au moins un participant comprend en outre les étapes ci-dessous consistant à :
déterminer si une identification associée audit au moins un participant est une identification reconnue pour la téléconférence ; et
connecter ledit au moins un participant à la téléconférence si l'identification est l'identification reconnue pour la téléconférence.

12. Procédé selon la revendication 11, dans lequel l'identification associée audit au moins un participant comprend l'un des éléments parmi un numéro de téléphone d'un dispositif de communication, un numéro SIM d'un dispositif sans fil, un emplacement, ou une identification biométrique.

13. Procédé selon la revendication 11, dans lequel l'identification reconnue comprend l'un des éléments parmi un numéro de téléphone pour un dispositif de communication, un numéro SIM pour un dispositif sans fil, un emplacement, ou une identification biométrique.

14. Procédé selon la revendication 11, dans lequel l'étape de détermination comprend en outre les étapes ci-dessous consistant à :
comparer l'identification associée audit au moins un participant à une ou plusieurs identifications reconnues pour la téléconférence ;
si l'identification associée audit au moins un participant correspond à au moins l'une des identifications reconnues pour la téléconférence, indiquer que l'identification est l'identification reconnue pour la téléconférence ; et
si l'identification associée audit au moins un participant ne correspond pas à au moins l'une des identifications reconnues pour la téléconférence, indiquer que l'identification n'est pas l'identification reconnue pour la téléconférence.

15. Procédé selon la revendication 11, comprenant en outre les étapes ci-dessous consistant à :
déterminer si ledit au moins un participant dispose d'un code d'accès permettant d'accéder à la téléconférence ; et
connecter ledit au moins un participant à la téléconférence si ledit au moins un participant dispose du code d'accès permettant d'accéder à la téléconférence.

16. Procédé selon la revendication 1, comprenant en outre les étapes ci-dessous consistant à :
enregistrer la téléconférence établie ; et
stocker la téléconférence enregistrée.

17. Produit formant programme informatique, comprenant :
un support lisible par ordinateur comprenant :
au moins une instruction pour amener un ordinateur à recevoir une demande d'inscription à une téléconférence comportant un ou plusieurs participants ;
au moins une instruction pour amener l'ordinateur à appeler ledit un ou lesdits plusieurs participants pour une téléconférence immédiate ;
au moins une instruction pour amener l'ordinateur à déterminer si ledit un ou lesdits plusieurs participants ont répondu à l'appel ;
au moins une instruction pour amener l'ordinateur à envoyer une notification audit un ou auxdits plusieurs participants qui n'ont pas répondu à l'appel, avec une invitation à se joindre à la téléconférence en attente ;
au moins une instruction pour amener l'ordinateur à recevoir une demande en provenance dudit un ou desdits plusieurs participants qui n'ont pas répondu à l'appel visant à se joindre à la téléconférence en attente en sélectionnant les informations de téléconférence dans l'invitation ; et
au moins une instruction pour placer ledit un ou lesdits plusieurs participants qui n'ont pas répondu à l'appel directement dans la téléconférence en attente suite à la réception de la demande visant à se joindre à la téléconférence en attente.

18. Appareil comprenant :
un moyen pour recevoir une demande d'inscription à une téléconférence comportant un ou plusieurs participants ;
un moyen pour appeler ledit un ou lesdits plusieurs participants pour une téléconférence immédiate ;
un moyen pour déterminer si ledit un ou lesdits plusieurs participants ont répondu à l'appel ;
un moyen pour envoyer une notification audit un ou auxdits plusieurs participants qui n'ont pas répondu à l'appel, avec une invitation à se joindre à la téléconférence en attente ;
un moyen pour recevoir une demande en provenance dudit un ou desdits plusieurs participants qui n'ont pas répondu à l'appel visant à se joindre à la téléconférence en attente en sélectionnant les informations de téléconférence dans l'invitation ; et
un moyen pour placer ledit un ou lesdits plusieurs participants qui n'ont pas répondu à l'appel directement dans la téléconférence en attente suite à la réception de la demande visant à se joindre à la téléconférence en attente.

19. Procédé pour se joindre à une téléconférence, le procédé comprenant les étapes ci-dessous consistant à :
recevoir, au niveau d'un dispositif sans fil (102, 108, 110), un appel pour une première téléconférence immédiate ;
recevoir, au niveau du dispositif sans fil (102, 108, 110), une notification avec une invitation à se joindre à la première téléconférence si le dispositif sans fil (102, 108, 110) ne répond pas à l'appel reçu ;
envoyer, par le biais du dispositif sans fil (102, 108, 110), une demande visant à se joindre à la téléconférence en attente en sélectionnant les informations de téléconférence dans l'invitation ; et
connecter le dispositif sans fil (102, 108, 110) directement à la première téléconférence suite à l'envoi de la demande visant à se joindre à la téléconférence en attente.

20. Procédé selon la revendication 19, comprenant en outre l'étape ci-dessous consistant à :
sélectionner une seconde téléconférence à laquelle se joindre.

21. Procédé selon la revendication 20, comprenant en outre l'étape ci-dessous consistant à :
basculer sur la seconde téléconférence.

22. Procédé selon la revendication 21, dans lequel l'étape de basculement sur la seconde téléconférence comprend en outre l'étape consistant à se déconnecter de la première téléconférence.

23. Procédé selon la revendication 20, dans lequel la première téléconférence et la seconde téléconférence sont en attente en même temps.

24. Produit formant programme informatique, comprenant :
un support lisible par ordinateur comprenant :
au moins une instruction pour amener un ordinateur à recevoir un appel pour une première téléconférence immédiate ;
au moins une instruction pour amener l'ordinateur à recevoir une notification avec une invitation à se joindre à la première téléconférence si l'ordinateur ne répond pas à l'appel reçu ;
au moins une instruction pour envoyer, par le biais de l'ordinateur, une demande visant à se joindre à la téléconférence en attente en sélectionnant les informations de téléconférence dans l'invitation ; et
au moins une instruction pour amener l'ordinateur à se connecter directement à la première téléconférence suite à l'envoi de la demande visant à se joindre à la téléconférence en attente.

25. Appareil comprenant :
un moyen pour recevoir un appel pour une première téléconférence immédiate ;
un moyen pour recevoir une notification avec une invitation à se joindre à la première téléconférence si l'appareil ne répond pas à l'appel reçu ;
un moyen pour envoyer une demande visant à se joindre à la téléconférence en attente en sélectionnant les informations de téléconférence dans l'invitation ; et
un moyen pour connecter l'appareil directement à la première téléconférence suite à l'envoi de la demande visant à se joindre à la téléconférence en attente.
